# EUROPEAN PATENT APPLICATION

(11) **EP 3 918 908 A1**
(43) Date of publication of application: **08.12.2021**
(21) Application number: 20748201.9
(22) Date of filing: 24.01.2020
(51) Int. Cl.: A01G 7/04, A01G 9/26

(54) **DEVICE FOR THE CULTIVATION OF PLANTS AND/OR MUSHROOMS**

(30) Priority: 28.01.2019 ES 201930128 U
(71) Applicant: De Olano Barrera, Pablo, 08026 Barcelona (ES)
(72) Inventor: De Olano Barrera, Pablo, 08026 Barcelona (ES)
(74) Representative: Clarke Modet & Co.
(86) International application number: PCT/ES2020/070050
(87) International publication number: WO 2020/157351

(57) **Abstract**

A device for growing plants and/or fungi, comprising: a growing space (3); a growth base (4) for growing plants and/or fungi (P); a ceiling (5); and lighting means (6) configured to provide light to the plants and/or fungi (P), wherein the growing space (3) is delimited between the growth base (4) and the ceiling (5). The growth base (4) comprises a plurality of growth zones (4_{Z}) defining a plurality of defining a plurality of zone heights (h_{4Z}) different to the lighting means (6), wherein said growth zones (4z) are configured for the simultaneous growing of plants and/or fungi (P) in different growth stages.

## Description

### Field of invention

The present application refers to a device for growing plants and/or fungi, specially designed for use indoors, such as in housing, restaurants, laboratories, etc.

### Background of the invention

Nowadays, there is a greater awareness of the importance of ecology, the need to promote sustainable development, and the convenience of maintaining an organic, healthy and wholesome diet. In addition, the use of plants for medicinal purposes is becoming more and more frequent.

Thus, more and more people are turning to growing food for self-consumption, as well as producing other types of plants for different uses. On the other hand, the lack of suitable outdoor spaces in urban areas for self-growing, the high level of care and dedication required by certain plant species, as well as the environmental conditions and the need to have them available at all times of the year, make it indispensable to use domestic devices for growing plants indoors.

WO2016/207900A1 shows an example of this type of devices. Specifically, the said document shows a device for growing plants indoors formed by an enclosing housing that defines a growing space internally, in turn, said growing space is delimited by a growth base located in the lower part and by a ceiling provided with lighting means configured to provide light to the plants located in the growth base. Said device is provided with energy means and functional means to fit out the inside space according to the needs of plants and provide the necessary water during their growth cycle.

It should be noted that the device of WO2016/207900A1 has a single growth zone, in which all the plants arranged therein are subjected to the same growth conditions and receive the same care in terms of nutrients and water. Therefore, all plants in said growth zone are in the same growth phase. That means that the user has to wait for their entire growth cycle to be completed to be able to use them. It means that the plants may only be used at specific times of the year, while the rest of the year, the space occupied by the device is used for plant growth. In other words, this type of devices does not allow the available space to be optimized for plant production capacity.

Another disadvantage of this type of devices is that it is difficult to provide the necessary care required by the plants at all times. Specifically, since conditions constantly vary in the same growth zone during the growth cycle of the plants, it is more complicated to provide the necessary nutrients and water at each stage of growth. In this sense, users must take care to mix these nutrients correctly and set the appropriate watering conditions, paying special attention to the growth stage of the plants. Since one always works with the same growth zone, there is a greater risk of making a mistake when mixing the components and/or confusing the growth phase.

The present invention solves the above problems using a device for growing plants (fruits, vegetables, herbs, etc.) and fungi (mushrooms, etc.), the growth base of which comprises a plurality of growth zones configured for the simultaneous growing of plants in different growth phases. That optimizes the available space so necessary indoors (housing, restaurants, laboratories, etc.), increases production capacity, enables the use and/or consumption of fresh products throughout the year, simplifies care tasks for all users in general, especially for the most inexperienced, favoring self-consumption and self-sufficiency.

### Description of the invention

The device for growing plants and/or fungi of the present invention comprises:
- a growing space;
- a growth base for growing plants and/or fungi;
- a ceiling; and
- lighting means configured to provide light to the plants and/or fungi;
wherein the growing space is delimited between the growth base and the ceiling.

Said device is characterized in that the growth base comprises a plurality of growth zones defining a plurality of different zone heights with respect to the lighting means, wherein said growth zones are configured for the simultaneous growing of plants and/or fungi in different growth stages, such as; germination, rooting, stem and leaf development, flowering, etc.

Likewise, the spaces that determine these growth zones could be used for other purposes such as maintaining parent plants to obtain cuttings, experimentation, seed production, drying, and curing, etc., with the appropriate means.

For example, the drying and curing process is an essential biochemical process that changes or preserves the plants' specific properties and could take months to be carried out. The spaces set up for this purpose allow this process to be controlled, e.g., by controlling oxygen, temperature, and/or humidity, and being able to do so by recycling the excess heat from the illumination media (lights). That could speed up the process by preserving and/or modifying the properties of the plants as desired. It could be carried out in hours or days instead of weeks or months.

In any case, the growth zones are configured to present the appropriate conditions for each growth phase, thus allowing the plants and/or fungi in each growth zone to receive the specific care associated with said growth phase. Among them, an optimal distance of plants and/or fungi to light source, regardless of height and/or size.

On the other hand, the growth zones could be communicated between them, that is to say, in a shared open space, or separated from each other, using physical separations, such as curtains, special fabrics, etc., and could also have means of quick assembly and disassembly, such as Velcro^{®}, among others. Likewise, access to the growth zones could be made jointly through an opening in common or separately through different gates.

The structural configuration of the device could be open or closed. According to an open configuration, the device is adapted to an interior space of a housing, restaurant, laboratory, etc., e.g., a room or enclosure, a closet, a chamber, etc. This open configuration makes it possible to periodically or temporarily move the device to outdoor space (terrace, balcony, etc.) when suitable external conditions (sunlight, weather) occur to encourage the growth of plants and/or fungi, thereby taking advantage of energy more efficiently. For example, supplying the remaining hours of light in cases where the plants and/or fungi simulate other climatic conditions, besides adding natural colors or light spectra that may also be missing in such simulation.

Thus, the device of the present invention could adapt its shape and/or size to the space where it is located, whether square, rectangular, circular, etc. Nevertheless, for better protection of the device, as well as to better preserve the growing conditions generated inside it, preferably, the device comprises an enclosing housing.

Said enclosing housing may comprise a substantially cylindrical, prismatic, square, rectangular shape, different heights or levels, etc., suitable for mounting on the enabled site. Optionally, the enclosing housing may take the shape of any object (e.g., a conventional closet) or existing enclosure, modifying only the accesses if necessary. A curtain or special fabric could also form it.

Similarly, the ceiling of the device could be the ceiling of the enclosure or object in which it is located. Nevertheless, for greater autonomy and protection, preferably, the device comprises its own ceiling, adapted to the constructive and/or structural configuration thereof and/or of the enclosing housing. For example, it may adopt a circular, square, rectangular, etc. shape.

In turn, the device may also comprise one or more ceilings located above the first ceiling to define other growing spaces within the same device, with the purpose of multiplying production by increasing the number of growth zones.

Both the enclosing housing and the ceiling may be manufactured with different materials that guarantee its structural configuration, favoring the maintenance of growing conditions, allowing a greater passage of sunlight, etc. For example, constructed with polarizable glass, mechanical or manual blinds, etc., that allow and/or block the passage of light as desired in a controlled manner.

The use of one or more polarizable windows facing the growing space is of particular interest for several reasons. First, because said screens allow electricity savings in lighting by making better use of sunlight. Second, because they make it possible to keep the photoperiods controlled and stable, and even filter the light in case of excess and/or provide the plants with different colors of illumination. Because of this, it is possible to harvest in different periods of the year depending on the genetics of the plants, e.g., shortening the photoperiods in summer by darkening the windows or lengthening them in winter by allowing a greater passage of artificial light. Thus, it is not only possible to bring forward harvests, but also to anticipate the appearance of pests, to use greater light intensity during the day, and, in short, to increase production.

Particularly interesting is the use of green polarizable windows, e.g., which, instead of turning from transparent to opaque, turn from transparent to green through the application of an electric current. That is because, as plants cannot photosynthesize in a green light, they understand that they are in the dark when they receive this type of light. That results in a more effectively and economically form to reduce the passage of light in a polarizable screen, as an alternative to having screens with a higher density of layers to obtain a higher opacity of the same.

In addition, the enclosing housing may comprise working means to manipulate the device more comfortably and even use the accesses of the said casing as tables. Solar panels could also be added to filter the green light by letting through the blue and red light, thus absorbing energy from the light spectrum that plants do not use for their metabolism, the green one.

The enclosing housing comprises at least one opening allowing access to the growth base. The enclosing housing may comprise other functional openings, e.g., to drying processes, individual access to the growth zones, equipment maintenance, etc.

The growth base could adopt different constructive configurations (tray, etc.), adapting its size and/or shape (circular, square, etc.) according to the interior space of the enclosure, chamber, closet, etc.

According to a case of preferred embodiment, the growth base is shaped like a tray, being able to be held by the center or the sides of the same, being suspended or supported on rails, wheels, or even magnets. It could have several holes or undulations to facilitate ventilation and/or drainage, where said holes could be opened and/or covered according to specific needs and/or preferences.

In turn, each growth zone comprises its own growing surface, configured to receive the nutrients required by the plants and/or fungi of each growth zone according to their growth stage.

The growth zones could be directly on the tray that forms the growth base. Nevertheless, preferably each growth zone employs one or more pots, specially adapted to the shape and constructive and/or functional characteristics of the device, improving the aeration of the roots, the absorption of nutrients, humidity, or temperature.

Each of these pots could incorporate a solar panel to bring electricity to the plants and/or fungi in order to stimulate their metabolism with electricity from residual light, heat the pot itself, or aerate it. They may also bear a mirror, or any other reflective material, in order to shield or reflect residual light to the plants and/or fungi.

The pots may comprise wheels under their base to place them conveniently in their exact position, closer together at the beginning and further apart as the plants grow. Such wheels also allow the pots to be rotated to vary the orientation of the plants so that they could receive light from all sides and/or conveniently reposition them to occupy the available space optimally as they grow. The wheels could be automated and controlled by remote control.

These growth zones make it easier for the user to provide the specific nutrients for each growth phase, e.g., by using packs with the nutrients mixed for each type of plant and/or fungus. Likewise, this procedure could also be automated and/or programmed using a computer program. Because of this, possible errors in the supply of nutrients are minimized or eliminated.

Preferably, each growth zone comprises its own tank, configured to store and conserve water and adapt the watering conditions of each growth zone's plants and/or fungi according to their growth phase. According to other embodiments, the tank may be common for different growth zones and/or external to the device. The watering may be performed from the growth base, from the ceiling, or both.

The tanks may adopt different sizes to maximize the use of space. Said sizes could be adapted to the needs of the plants in each growth phase, being smaller in the initial stages of growth when the plants consume less water and nutrients and larger in more advanced stages of growth. This division by size of the tanks also allows the presence of fish in them as aquaponics, as fertilizer for the plants, being able to change them as they grow to tanks with more space.

Preferably, the growth zones are arranged beside each other along a straight line, curve, or circle, in which the zone heights increase in a stepped or progressive manner from the first to the last growth zone. That could be done by varying the surface of the growth base, the surface of the ceiling, or both.

According to a first preferred embodiment, the ceiling presents a stepped surface defining a plurality of steps corresponding to the plurality of growth zones. In turn, the lighting means are arranged on each step.

According to a second preferred embodiment, the ceiling presents a spiral surface. In turn, the lighting means comprise a plurality of artificial light sources arranged along the spiral surface.

Preferably, the lighting means are arranged on the ceiling. They may also be arranged laterally, e.g., mounted on the inner wall of the enclosing housing.

The lighting means could be of various types (spotlights, floodlights, etc.), powers, spectrums, and/or sizes, facing the same so as to focus the light where it is most needed (e.g., concentrating the light on the shoots, rather than on the less important branches or leaves), using energy more efficiently.

In addition, they may be explicitly selected for each growth zone so that they are the most suitable for the growth phase intended for said growth zone. For example, in spectra, it is known that each spectrum affects a part of the plant's metabolism. Depending on the spectrum, some chemicals over others could be selected, perform experiments, or find the best way to combine them for higher yield or taste.

According to a preferred embodiment, the lighting means comprise one or more artificial light sources formed by a bundle of optical fibers or light-emitting diodes.

The lighting means may be integrated into other apparatus and/or functional equipment of the device. For example, the lamps and/or their supporting elements may be provided with; air inlets/outlets, fans, water inlets/outlets, tanks, water pumps, water inlets (e.g., taps), etc., their shape, arrangement, and/or geometry being adapted to facilitate such integration.

In order to facilitate the operation by the user, preferably, the growth base and the ceiling present a relative rotation movement with respect to a vertical axis. Because of this, it is not necessary to transplant the plants and/or fungi from one growth zone to another when they change their growth phase in order to vary their distance (zone height) with respect to the lighting means.

That could be done by rotating the growth base, the ceiling, or both. Preferably, however, the growth base has a rotating character, while the ceiling has a fixed character. In this way, it is possible to move directly the whole growth zone or several simultaneously to enable it for another growth phase. The rotation could be manual or automatic, e.g., using an electric motor controlled locally or remotely (e.g., with a computer application).

Preferably, the device comprises a fitting out module configured to fit out the growing space according to one or more environmental parameters, such as temperature, humidity, and/or luminosity.

Preferably, the device comprises a control module configured to control the growth of plants and/or fungi according to one or more control parameters, such as the visual appearance of plants and/or fungi and/or the growth time.

Preferably, the device comprises a monitoring and interaction module configured to allow the user to visualize environmental and/or control parameters of the device and interact therein locally or remotely. For example, through the use of cameras.

Preferably, the device comprises an operating module configured to provide the necessary electrical power to the device.

Preferably, the device comprises a first growth space and a second growth space separated by a stepped surface or spiral surface ceiling.

Other equipment, accessories, and/or systems that may comprise the device are summarized below. Sprayers, equipment to reproduce sounds (e.g., to provoke stimuli), and/or ultrasounds (e.g., to favor climates), connections for ozone (disinfects, removes odors, and protects from fungi), connections for CO₂ (increases the ability to photosynthesize and production, plants may withstand higher temperature), cooling or heating systems, enclosing housing insulation systems, light controllers and/or dimmers to reproduce different types of light at different times in different locations, odor generation equipment, programmable alarm, and/or warning devices, emergency batteries to keep the system operating at a minimum energy cost, insect traps, etc.

The device could be operated using a computer program or software, capable of controlling, supervising, and/or interacting with the device's different functional modules and/or equipment. For example, to create weather patterns or reproduce them (not only improve the quality of life of plants, but in a programmed way could significantly reduce the energy used), to provide specific nutrients for each growth phase, to obtain data to help learn about plants, compare parameters to discern the behavior of the same and to prevent or treat diseases, pests, deficiencies, and excesses, to program optimal growing methods for each type of plant, etc. This software could be used from any kind of mobile device (phone, tablet, laptop, etc.).

The device of the present invention could also be used for care and /or breeding farm animals (e.g., chickens), fish, or insects.

### Brief description of the drawings

The following is a brief description of a series of drawings that help to understand the invention better and relate expressly to various embodiments of said invention, which are presented as non-limiting examples thereof.
Figure 1 represents an exploded view of the device for growing plants and/or fungi of the present invention, according to a first preferred embodiment.
Figure 2 represents an elevation view of the device of figure 1, including the enclosing housing.
Figure 3 represents a schematic view of the distribution of the zone heights for each growth zone, according to a first example.
Figure 4 represents a schematic view of the distribution of the zone heights for each growth zone, according to a second example.
Figure 5 represents an perspective view of the device for growing plants and/or fungi of the present invention, according to a second preferred embodiment.
Figure 6 represents a schematic view of a growth base of an oval configuration of the device for growing plants and/or fungi of the present invention.
Figure 7 represents a schematic view of a growth base, as an example of the possible distribution of plants and/or fungi within the device for growing plants and/or fungi of the present invention.
Figure 8 represents a schematic view of the device for growing plants and/or fungi of the present invention, according to a case of embodiment particularly adapted for use in outdoor spaces, such as cultivating fields, etc.
Figure 9 represents a schematic view of a growth base, as another example of the possible distribution of plants and/or fungi within the device for growing plants and/or fungi of Figure 8.
Figure 10 represents a schematic view of two growth base, as another example of the possible distribution of plants and/or fungi in which two devices for growing plants and/or fungi according to the present invention are combined.

### Detailed description of the invention

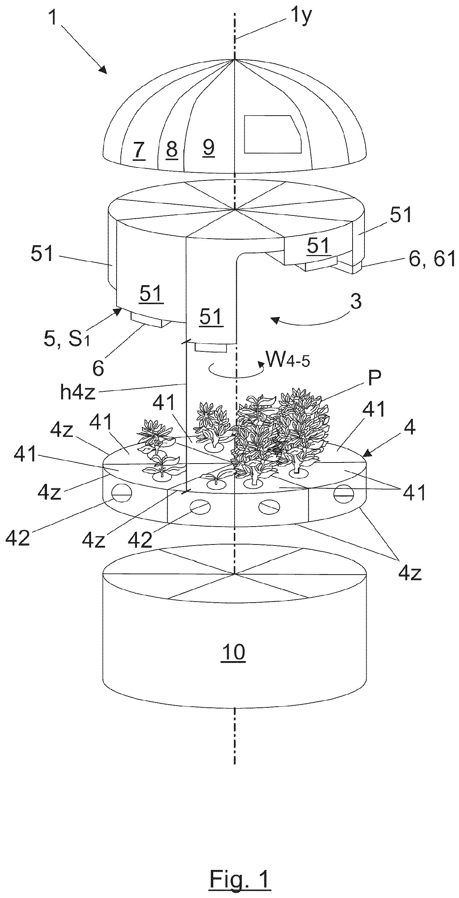

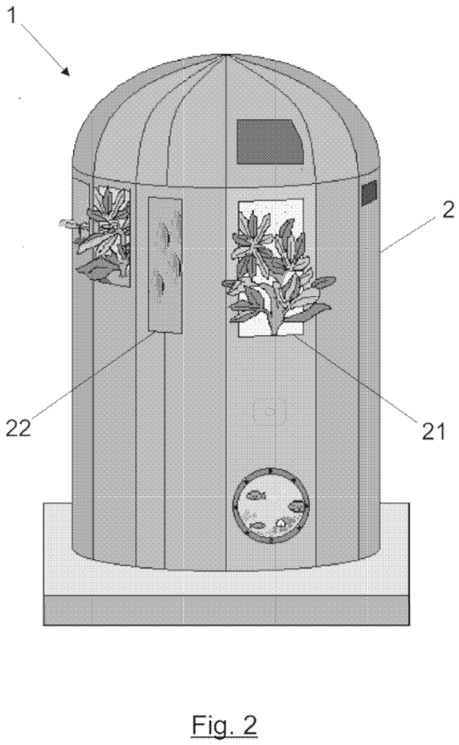

As can be seen in Figures 1 and 2, the device (1) for growing plants and/or fungi (P) of the present invention comprises:
- a growing space (3);
- a growth base (4) for growing plants and/or fungi (P);
- a ceiling (5); and
- lighting means (6) configured to provide light to the plants and/or fungi (P);
wherein the growing space (3) is delimited between the growth base (4) and the ceiling (5).

Said device (1) is characterized in that the growth base (4) comprises a plurality of growth zones (4z) defining a plurality of different zone heights with respect to the lighting means (6), wherein said growth zones (4z) are configured for the simultaneous growing of plants and/or fungi (P) in different growth stages, such as; germination, rooting, stem and leaf development, flowering, etc.

The device (1) comprises an enclosing housing (2) that also defines internally the growing space (3), delimiting it laterally. Said enclosing casing (2) comprises a substantially cylindrical shape.

The enclosing housing (2) comprises at least one opening (21), allowing access to the growth base (4), and another functional opening (22) for other processes, e.g., a drying process.

The growth base (4) is shaped as a tray. In turn, each growth zone (4z) comprises its own growing surface (41), configured to receive the nutrients required by the plants and/or fungi (P) of each growth zone (4) according to their growth stage. Each growth zone (4z) comprises its own tank (42), configured to store and conserve water and adapt the watering conditions of each growth zone's (4) plants and/or fungi (P) according to their growth phase.

The growth zones (4z) are arranged side by side in a circle, with zone heights (h_{4Z}) increasing in steps from the first to the last growth zone (4_{Z}). That is done by varying the area of the ceiling (5).

Thus, the ceiling (5) presents a stepped surface (Si) defining a plurality of steps (51) in correspondence with the plurality of growth zones (4z). In turn, the lighting means (6) comprise an artificial light source (61) arranged on each step (51).

In order to facilitate the operation by the user, preferably, the growth base (4) and the ceiling (5) present a relative rotation movement (ω₄₋₅) with respect to a vertical axis (1y). Thus, as the plants and/or fungi (P) grow, the growth base (4) is rotated so that each growth zone (4z) acquires a different zone height (h_{4Z}), i.e., a different distance to the lighting means (6).

The device (1) comprises a fitting out module (7) configured to fit out the growing space (3) according to one or more environmental parameters, such as temperature, humidity, and/or luminosity.

The device (1) comprises a control module (8) configured to control the growth of plants and/or fungi (P) according to one or more control parameters, such as the visual appearance of plants and/or fungi (P) and/or the growth time.

The device (1) comprises a monitoring and interaction module (9) configured to allow the user to visualize environmental and/or control parameters of the device (1) and interact therein locally or remotely. For example, through the use of cameras.

The device (1) comprises an operating module (10) configured to provide the necessary electrical power to the device (1).

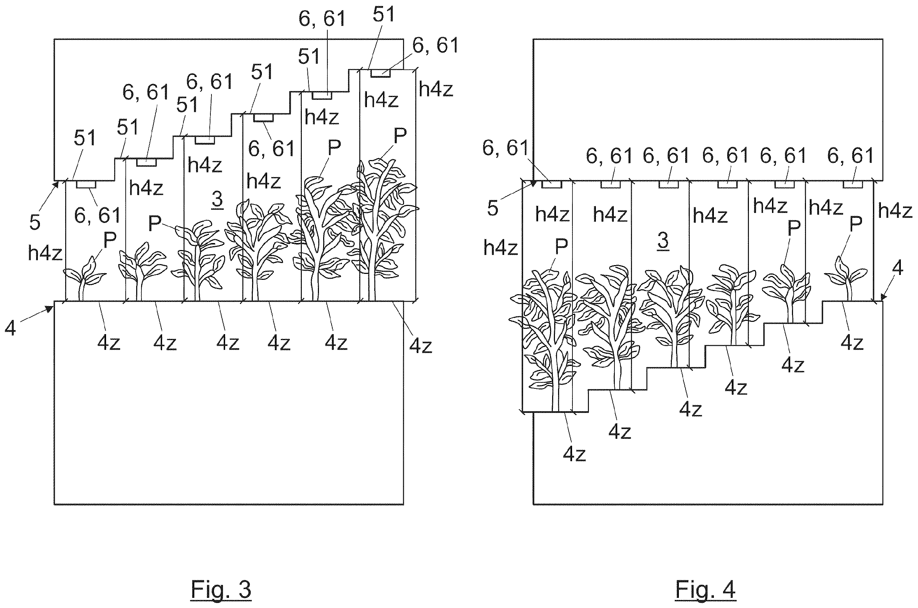

Figure 3 shows a schematic view of the distribution of the zone heights (h_{4Z}) for each growth zone (4z), according to a first example. In this case, the zone heights (h_{4Z}) variation associated with each growth phase is realized by staggering the ceiling surface (5).

Figure 4 shows a schematic view of the distribution of the zone heights (h_{4Z}) for each growth zone (4z), according to a second example. In this case, the zone heights (h_{4Z}) variation associated with each growth phase is realized by staggering the growth base surface (4).

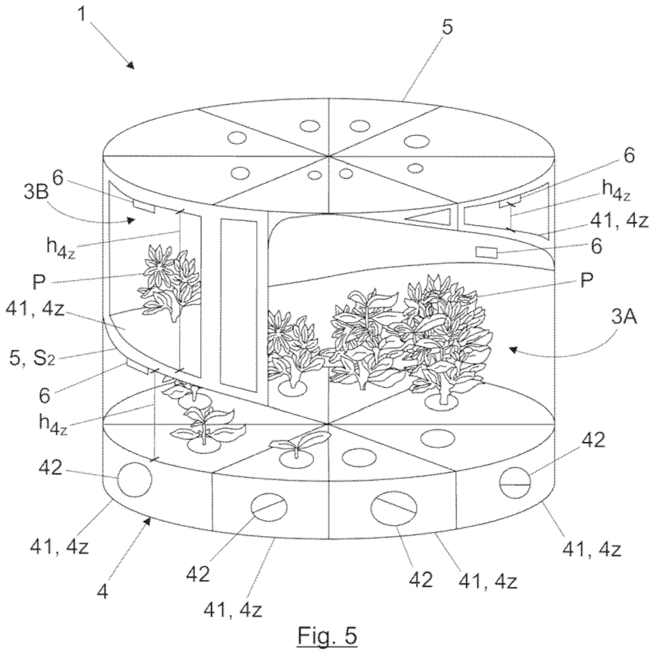

Figure 5 shows an perspective view of the device (1) for growing plants and/or fungi (P) of the present invention, according to a second preferred embodiment.

In this case, the device (1) comprises another ceiling (5) located above the first ceiling (5) to define two growing spaces (3A, 3B) within the same device (1), with the purpose of multiplying the production by increasing the number of growth zones (4_{Z}). Specifically, the device (1) comprises a first growing space (3A) and a second growing space (3B) separated by a ceiling (5) with a spiral surface (S₂).

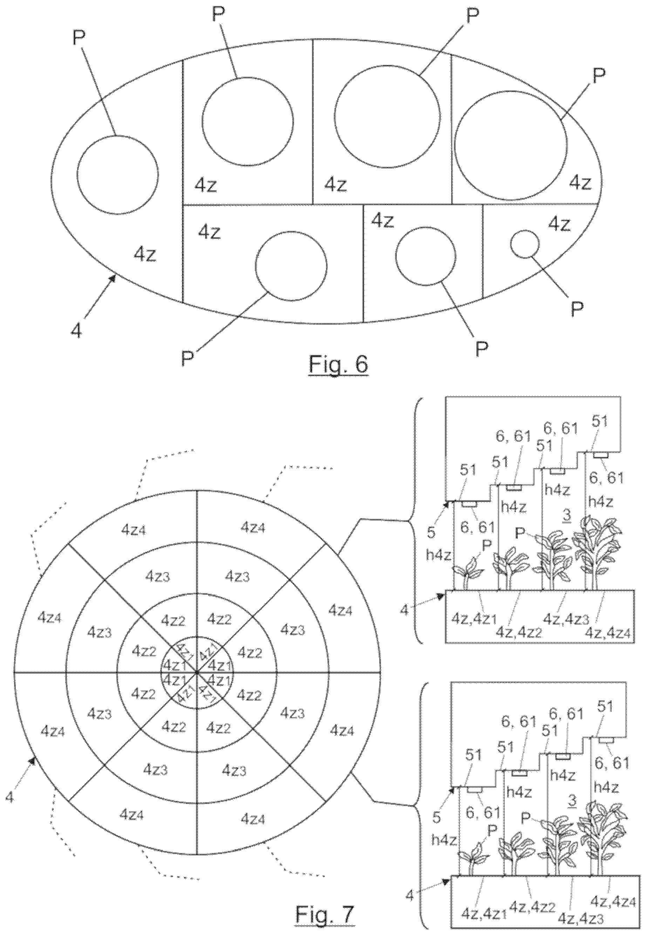

Figure 6 shows a schematic view of a growth base (4) of an oval configuration of the device (1) for growing plants and/or fungi (P) of the present invention. The size of the plants (P) is represented by the diameter of the circles (smaller circles relate to more initial stages of growth, while larger circles relate to more advanced stages of growth). This embodiment makes it possible to exploit the overall growing space further and, at the same time, to give the plants and/or fungi (P) a more proportional space for each growth phase, combining the growth zones (4Z) according to the height and width of the plants and/or fungi (P) foreseen for each of them. As in the embodiment of figure 5, different growing spaces (3A, 3B) could be defined within the same device (1) with overlapping oval growth bases (4), facing plants and/or fungi (P) in the early stages of growth with plants and/or fungi (P) in more advanced stages of growth to maximize the use of the growing space.

Figure 7 shows a schematic view of a growth base (4) of the device (1) for growing plants and/or fungi (P) of the present invention in which the growth zones (4_{Z}, 4_{Z1}, 4_{Z2}, 4_{Z3}, 4_{Z4}) are distributed from inside out, allowing better use of the lateral space as the plants and/or fungi (P) grow. That allows several crops with different varieties to be harvested simultaneously in an organized manner.

The device (1) for growing plants and/or fungi (P) of the present invention could admit various modes of distribution of the plants and/or fungi (P), not illustrated such as, e.g., spiral embodiments in which the growth zones (4_{Z}, 4_{Z1}, 4_{Z2}, 4_{Z3}, 4_{Z4}) are distributed from inside out, etc.

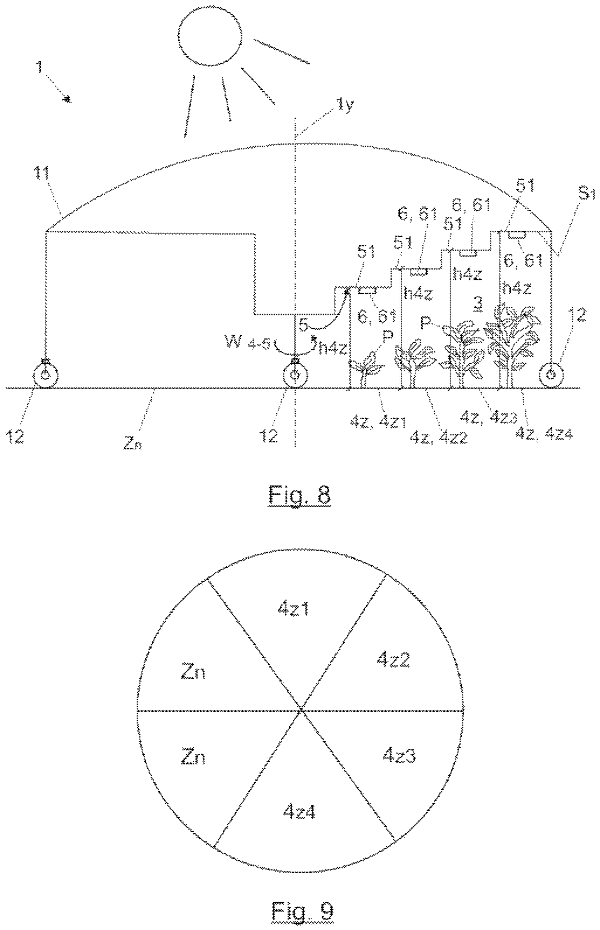

Figure 8 shows a schematic view of the device for growing plants and/or fungi of the present invention, according to a case of embodiment particularly adapted for use in outdoor spaces, such as cultivating fields, etc.

As can be seen, the device (1) for growing plants and/or fungi for use in outdoor spaces comprises:
- a growing space (3);
- a growth base (4) for growing plants and/or fungi (P), in this case, directly on the soil of the cultivating field itself;
- a ceiling (5); and
- an outer cover (11) in which the ceiling (5) is integrated;
- lighting means (6) configured to provide light to the plants and/or fungi (P); and
wherein the growing space (3) is delimited between the growth base (4) and the ceiling (5).

Said device (1) is characterized in that the growth base (4) comprises a plurality of growth zones (4z) defining a plurality of defining a plurality of zone heights (h_{4Z}) different to the lighting means (6), wherein said growth zones (4z) are configured for the simultaneous growing of plants and/or fungi (P) in different growth stages.

The growth zones (4_{Z}) are distributed beside each other along a straight line in which the zone heights (h_{4Z}) increase in a stepped or progressive manner from the first (4_{Z1}) to the last growth zone (4_{Z4}).

The ceiling (5) presents a stepped surface (S₁) defining a plurality of steps (51) in correspondence with the plurality of growth zones (4_{Z}).

The lighting means (6) are arranged on each step (51) and comprise a plurality of artificial light sources (61).

The outer cover (11) comprises displacement means (12), e.g., wheels, configured to allow the said outer cover (11) to be moved and/or rotated on the growth base (4).

The outer cover (11) and the ceiling (5) could rotate with respect to the growth base (4) according to a relative turning movement (ω₄₋₅) with respect to a vertical axis (1y) of the device (1), and/or be moved to another field or growth base (4).

The device (1) may comprise other areas of (Zₙ) enabled for farm animals, such as chickens, ducks, etc., which may partly feed on plant remains of the crop, accelerating their decomposition and restoring the soil with fertilizer.

Figure 9 shows a schematic view of a growth base, as another example of the possible distribution of plants and/or fungi within the device (1) for growing plants and/or fungi of figure 8, wherein the growth zones (4_{Z}, 4_{Z1}, 4_{Z2}, 4_{Z3}, 4_{Z4}) are distributed beside each other along a curve in which the zone heights (h_{4Z}) increase in a stepped or progressive manner from the first zone (4_{Z1}) to the last growth zone (4_{Z4}).

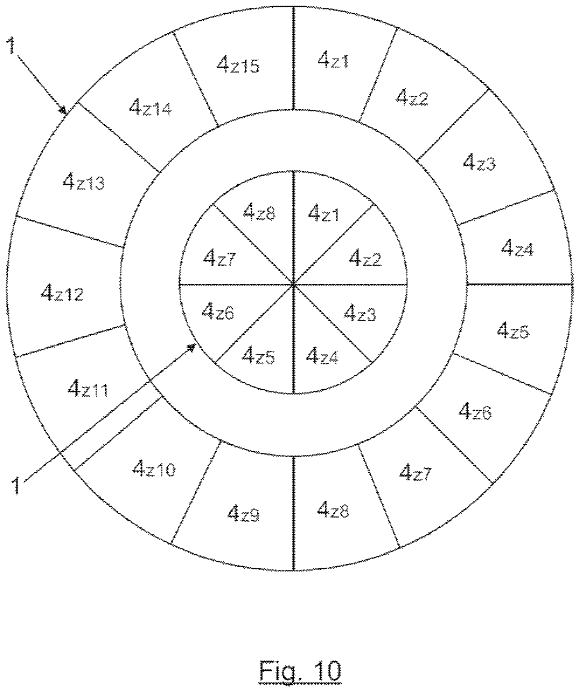

In Figure 10 may be seen two devices (1) arranged concentrically, their respective growth zones facing each other. The growth zones (4z) of the internal device (1) are distributed beside each other along a circle in which the zone heights (h_{4Z}) increase in a stepped or progressive manner from the first (4_{Z1}) to the last growth zone (4zs). Likewise, the growth zones (4_{Z1}...4_{Z15}) of the external device (1) are distributed beside each other along a circle in which the zone heights (h_{4Z}) increase in a stepped or progressive manner from the first (4_{Z1}) to the last growth zone (4_{Z15}). Between the two devices (1), a passageway and/or corridor could be arranged for access to the growth zones.

The inner (4_{Z1}...4_{Z8}) and outer (4_{Z1}...4_{Z15}) growth zones could be used for growing plants and/or fungi corresponding to different species. In turn, the internal growth zones (4_{Z1}...4_{Z8}) could face the external growth zones (4_{Z1}...4_{Z8}), given the rotating capacity of the growth base (4) and/or the ceiling (5) of the devices (1), being grouped by growth phases of each species corresponding to similar zone heights (h_{4Z}). In this way, crops of different characteristics could be synchronized to be harvested in the same place, even if they require different growth times. For example; the internal device (1) could be used to harvest a first species (e.g., lettuce), while the external device (1) could be used at the same time to harvest a second species (e.g., tomatoes) which has a different, preferably longer, growing period.

## Claims

1. A device for growing plants and/or fungi, comprising:
- a growing space (3);
- a growth base (4) for growing plants and/or fungi (P);
- a ceiling (5); and
- lighting means (6) configured to provide light to the plants and/or fungi (P);
wherein the growing space (3) is delimited between the growth base (4) and the ceiling (5); said device (1) **characterized in that** the growth base (4) comprises a plurality of growth zones (4z) defining a plurality of zone heights (h_{4Z}) different to the lighting means (6), wherein said growth zones (4z) are configured for the simultaneous growing of plants and/or fungi (P) in different growth stages.

2. The device for growing plants and/or fungi according to claim 1, **characterized in that** comprises an enclosing housing (2).

3. The device for growing plants and/or fungi according to any of claims 1 to 2, **characterized in that** each growth zone (4_{z}) comprises its own growing surface (41), configured to receive the nutrients required by the plants and/or fungi (P) of each growth zone (4) according to their growth stage.

4. The device for growing plants and/or fungi according to any of claims 1 to 3, **characterized in that** each growth zone (4_{z}) comprises its own tank (42), configured to store and preserve water, y to adapt watering conditions of the plants and/or fungi (P) of each growth zone (4) according to their growth stage.

5. The device for growing plants and/or fungi according to any of claims 1 to 4, **characterized in that** the growth zones (4_{z}).are arranged beside each other along a straight line or curve in which the zone heights (h_{4Z}) increase in a stepped or progressive manner from the first to the last growth zone (4z).

6. The device for growing plants and/or fungi according to any of claims 1 to 5, **characterized in that** the lighting means (6) are arranged on the ceiling.

7. The device for growing plants and/or fungi according to any of claims 1 to 6, **characterized in that** the growth base (4) and the ceiling (5) present a relative turning movement (ω₄₋₅) with respect to a vertical axis (1y).

8. The device for growing plants and/or fungi according to any of claims 1 to 7, **characterized in that** the growth base (4) presents a rotating character; **and in that** the ceiling (5) has a fixed character.

9. The device for growing plants and/or fungi according to any of claims 1 to 8, **characterized in that** the ceiling (5) has a stepped surface (Si) defining a plurality of steps (51) in correspondence with the plurality of growth zones (4z); **and in that** the lighting means (6) are arranged on each step (51).

10. The device for growing plants and/or fungi according to any of claims 1 to 9, **characterized in that** the ceiling (5) presents a spiral surface (S₂).

11. The device for growing plants and/or fungi according to any of claims 1 to 10, **characterized in that** the lighting means (6) comprise a plurality of artificial light sources (61); **and in that** the artificial light sources (61) comprises a bundle of optical fibers or light-emitting diodes.

12. The device for growing plants and/or fungi according to any of claims 1 to 11, **characterized in that** comprises a fitting out module (7) configured to fit out the growing space (3) according to one or more environmental parameters, such as temperature, humidity, and/or luminosity.

13. The device for growing plants and/or fungi according to any of claims 1 to 12, **characterized in that** comprises a control module (8) configured to control the growth of plants and/or fungi (P) according to one or more control parameters, such as the visual appearance of plants and/or fungi (P) and/or the growth time.

14. The device for growing plants and/or fungi according to any of claims 1 to 13, **characterized in that** comprises a monitoring and interaction module (9) configured to allow the user to visualize environmental and/or control parameters of the device (1) and interact therein locally or remotely.

15. The device for growing plants and/or fungi according to any of claims 1 to 14, **characterized in that** comprises a first growing space (3A) and a second growing space (3B) separated by a ceiling (5) with stepped surface (Si) or with spiral surface (S₂).

16. The device for growing plants and/or fungi according to any of claims 1 to 15, **characterized in that** comprises polarizable materials configured to control the passage of light to the growing space (3).
